# EUROPEAN PATENT APPLICATION

(11) **EP 1 101 646 A2**
(43) Date of publication of application: **23.05.2001**
(21) Application number: 00125044.8
(22) Date of filing: 16.11.2000
(51) Int. Cl.: B60K 26/02

(54) **Electric accelerator pedal assembly of automobile**

(30) Priority: 19.11.1999 KR 9951507
(71) Applicant: KIA MOTORS CORPORATION, Youngdeungpo-gu, Seoul (KR)
(72) Inventor: Kim, Sang-jin, Jangan-gu, Suwon-shi, Kyunggi-do (KR)
(74) Representative: Viering, Jentschura & Partner

(57) **Abstract**

The electric accelerator pedal assembly includes a retainer (110) fixed to a body of the automobile, an accelerator rod (120) mounted with a pedal at one end thereof, the accelerator rod being hingedly supported by the retainer (110), a pair of lever arms (141,142) for transmitting a hinging angle of the accelerator rod (120) in an amplified state, a rotating shaft for changing the amplified hinging angle into a rotating angle, a potentiometer (150) for detecting the rotating angle transmitted from the rotating shaft, and outputting a detect signal indicative of the detected rotating angle, and an electronic control unit for receiving the detect signal from the potentiometer (150), and electrically controlling an opening degree of a throttle valve in response to the received detect signal.

## Description

### BACKGROUND OF THE INVENTION

### Field of the Invention

The present invention relates to an accelerator of an automobile, and more particularly to an electric accelerator pedal assembly of an automobile, which can be easily and accurately manipulated without any possibility of failures resulting from a damage of a cable used, while being capable of reducing the number of assembling steps.

### Description of the Related Art

The engine of an automobile is a mechanism including a plurality of cylinders and serving to convert thermal energy, generated by burning a mixture of air and fuel in each of the cylinders, into mechanical energy. In order to control the amount of the air/fuel mixture supplied to each cylinder, the automobile also includes an accelerator.

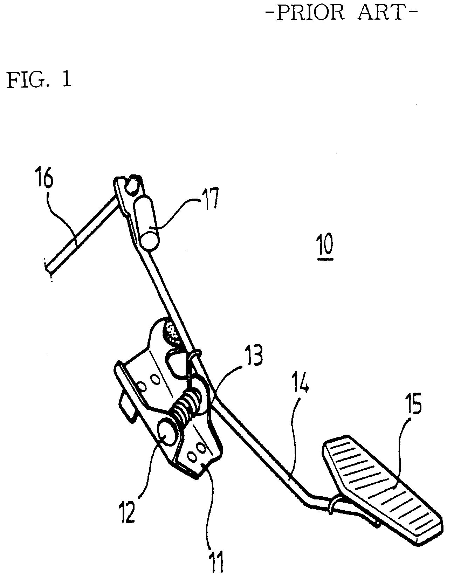

Fig. 1 illustrates a schematic perspective view of a conventional pedal assembly for an accelerator having the above mentioned function. Referring to Fig. 1, the conventional accelerator pedal assembly, which is denoted by the reference numeral 10, includes an accelerator rod 14 hingedly supported by a retainer 11 fixedly mounted to an automobile body. A spindle 12 is rotatably mounted to a desired portion of the retainer 11. A torsion coil spring 13 is fitted around the spindle 12.

The accelerator rod 14 is coupled to the spindle 12 at an intermediate portion thereof so that it hinges about the spindle 12. The accelerator rod 14 is always urged in one direction by the torsion coil spring 13. A pedal 15 is fixedly mounted to one end of the accelerator rod 14. A cable 16 is connected at one end thereof to the other end of the accelerator rod 14. The other end of the cable 16 is coupled to a throttle body (not shown). In Fig. 1, the reference numeral 17 denotes a weight.

In the conventional accelerator pedal assembly 10 having the above mentioned configuration, the accelerator rod 14 hinges about the spindle 12 against the biasing force of the torsion coil spring 13 when the pedal 15 is depressed. As a result, the cable 16 connected to the end of the accelerator rod 14 opposite to the pedal 15 is drawn. When the cable 16 is drawn, it actuates the throttle body, thereby increasing the opening degree of a throttle valve (not shown). When the pedal 15 is subsequently released, the accelerator rod 14 hinges about the spindle 12 by virtue of the biasing force of the torsion coil spring 13 in an opposite direction, so that it returns to its original position. As a result, the drawn cable 16 returns to its original position, thereby causing the opening degree of the throttle valve to be decreased.

In the above mentioned accelerator pedal assembly 10, however, the opening degree of the throttle valve can be adjusted only by the depression force of the driver applied to the pedal 15. Furthermore, the transmission of the depression force to the throttle valve is conducted only by the cable 16. For this reason, it is impossible to accurately manipulate the accelerator pedal assembly 10. In addition, a considerable force is required to manipulate the pedal 15 because of a resistance of the cable 16. In the case in which the cable 16 is old, it is further difficult to manipulate the pedal 15. In severe cases, the cable 16 may be damaged or broken. The manufacture process of the accelerator pedal assembly 10 has an increased number of assembling steps because it involves an assembling process for the cable 16.

### SUMMARY OF THE INVENTION

The present invention has been made in view of the above mentioned problems, and an object of the invention is to provide an electric accelerator pedal assembly of an automobile, which can be easily and accurately manipulated without any possibility of failures resulting from a damage of a cable used, while being capable of reducing the number of assembling steps.

In accordance with the present invention, this object is accomplished by providing an electric accelerator pedal assembly of an automobile comprising: a retainer fixed to a body of the automobile; an accelerator rod mounted with a pedal at one end thereof, the accelerator rod being hingedly supported by the retainer; hinging angle transmitting means for transmitting a hinging angle of the accelerator rod in an amplified state; a potentiometer for detecting the amplified hinging angle transmitted from the hinging angle transmitting means, and outputting a detect signal indicative of the detected hinging angle; and an electronic control unit for receiving the detect signal from the potentiometer, and electrically controlling an opening degree of a throttle valve in response to the received detect signal.

Preferably, the accelerator rod is hingedly mounted to a spindle fixedly mounted to the retainer so that it hinges about the spindle. Preferably, the hinging angle transmitting means comprises a first lever arm hingedly connected at one end thereof to the other end of the accelerator rod by a first connecting pin, a second lever arm hingedly connected at one end thereof to the other end of the first lever arm by a second connecting pin, and a rotating shaft fixed at one end thereof to the other end of the second lever arm while being coupled at the other end thereof to the potentiometer, whereby the hinging movement of the accelerator rod about the spindle is transmitted to the rotating shaft in an amplified state via the first and second lever arms, thereby causing the rotating shaft to generate an amplified rotation.

Preferably, a torsion coil spring is fitted around the spindle. The torsion coil spring serves to apply a biasing force to the accelerator rod toward an initial position of the accelerator rod, whereby the accelerator rod hinges from the initial position against the biasing force of the torsion coil spring when a depression force is applied to the pedal, while hinging toward the initial position by virtue of the biasing force of the torsion coil spring when the depression force applied to the pedal is reduced.

Preferably, a stopper is protruded from the retainer. The stopper serves to limit the hinging movement of the accelerator rod resulting from the biasing force of the torsion coil spring so that the hinging movement of the accelerator rod resulting from the biasing force of the torsion coil spring is stopped at the initial position of the accelerator rod.

### BRIEF DESCRIPTION OF THE DRAWINGS

The above objects, and other features and advantages of the present invention will become more apparent after a reading of the following detailed description when taken in conjunction with the drawings, in which:
Fig. 1 is a schematic perspective view illustrating a conventional accelerator pedal assembly; and
Fig.2 is a schematic perspective view illustrating an accelerator pedal assembly according to an embodiment of the present invention.

### DESCRIPTION OF THE PREFERRED EMBODIMENTS

Now, an electric accelerator pedal assembly according to an embodiment of the present invention will be described with reference to the annexed drawings.

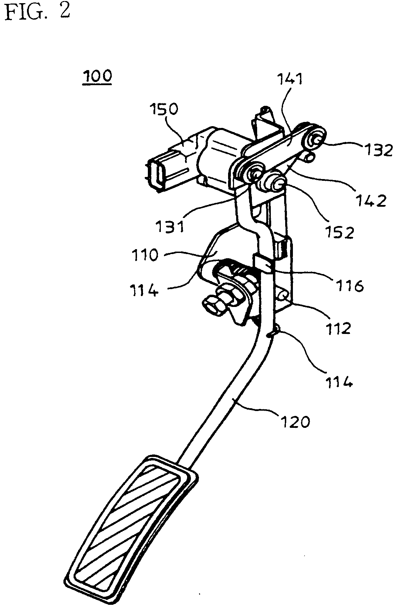

Referring to Fig. 2, the electric accelerator pedal assembly according to the illustrated embodiment of the present invention is shown. As shown in Fig. 2, the electric accelerator pedal assembly, which is denoted by the reference numeral 100, includes a retainer 110 fixed to an automobile body, an accelerator rod 120 hingedly supported by the retainer 110, a pair of lever arms, that is, a first lever arm 141 and a second lever arm 142, adapted to transmit a hinging angle of the accelerator rod 120 in an amplified state, and a potentiometer 150 for controlling the opening degree of a throttle valve (not shown) in accordance with the transmitted hinging angle.

A spindle 112 is rotatably mounted to a lower portion of the retainer 110. A torsion coil spring 114 is fitted around the spindle 112. The torsion coil spring 114 is mounted at one end thereof to the retainer 110 while being mounted at the other end thereof to the accelerator rod 120. The torsion coil spring 114 serves to return the accelerator rod 120 to its initial position against a hinging movement of the accelerator rod 120 occurring in response to a pedal depression force applied to the accelerator rod 120. A stopper 116 is protruded from the retainer 110 in order to limit the return of the accelerator rod 120 made by virtue of the biasing force of the torsion coil spring 114. That is, the stopper 116 sets the initial position of the accelerator rod 120.

A pedal 112 is fixedly mounted to one end of the accelerator rod 120 opposite to the lever arms 141 and 142. The lever arm 141 is hingedly coupled at one end thereof to the other end of the accelerator rod 120 by means of a first connecting pin 131. Accordingly, the accelerator rod 120 and first lever arm 141 conduct relative hinging movements with respect to each other about the first connecting pin 131.

The accelerator rod 120 is arranged in such a fashion that it hinges from its initial position in one direction when the pedal is depressed against the biasing force of the torsion coil spring 114 while returning to its initial position in an opposite direction by virtue of the biasing force of the torsion coil spring 114 when the depression force applied to the pedal is released. As mentioned above, the returning movement of the accelerator rod 120 is limited to the initial position by the stopper 116.

The second lever arm 142 is hingedly connected at one end thereof to the other end of the first lever arm 141 by means of a second connecting pin 132. Accordingly, the first and second lever arms 141 and 142 conduct relative hinging movements with respect to each other about the second connecting pin 132. The other end of the second lever arm 142 is fixedly coupled to a rotating shaft 152 protruded from the potentiometer 150. Accordingly, the hinging movement of the second lever arm 142 about the rotating shaft 152 is transmitted to the potentiometer 150 in the form of a rotation of the rotating shaft 152.

The potentiometer 150 is fixedly mounted to an upper portion of the retainer 110. The rotating shaft 152 is partially received in the potentiometer 150. This potentiometer 150 is a variable resistor and serves to detect a variation in potential difference occurring due to a rotation of the rotating shaft 152, thereby recognizing a variation in the rotating angle of the rotating shaft 152.

Now, the operation of the electric accelerator pedal assembly 100 having the above mentioned configuration according to the illustrated embodiment of the present invention will be described.

When the driver depresses the pedal 122, the accelerator rod 120 hinges about the spindle 112 in a counterclockwise direction when viewed in Fig. 2. As a result, the end of the accelerator rod 120 opposite to the pedal 122 moves in a forward direction when viewed in Fig. 2, so that the first connecting pin 131, the first lever arm 141 connected to the first connecting pin 131, and the second connecting pin 132 connected to the first lever arm 141 move forwardly. Accordingly, the second lever arm 142 hinges in a counterclockwise direction when viewed in Fig. 2. This hinging movement of the second lever arm 142 results in a counterclockwise rotation of the rotating shaft 152.

The potentiometer 150 detects the rotating angle of the rotating shaft 152 in response to a variation in potential difference occurring due to the rotation of the rotating shaft 152, and informs an electronic control unit (not shown) of the detected rotating angle. In response to the rotating angle, the electronic control unit controls the throttle body, thereby controlling the opening degree of the throttle valve.

On the other hand, when the driver releases the depression force applied to the pedal 122, the electric accelerator pedal assembly 100 operates in a fashion reverse to that in the case in which the pedal 122 is depressed. That is, the accelerator rod 120 hinges about the spindle 112 in a clockwise direction when viewed in Fig. 2. As a result, the end of the accelerator rod 120 opposite to the pedal 122 moves in a rearward direction when viewed in Fig. 2, so that the first connecting pin 131 connected to the accelerator rod 120, the first lever arm 141, and the second connecting pin 132 move rearwardly. Accordingly, the second lever arm 142 hinges in a clockwise direction when viewed in Fig. 2. This clockwise hinging movement of the second lever arm 142 results in a clockwise rotation of the rotating shaft 152.

The potentiometer 150 informs the electronic control unit of the rotating angle of the rotating shaft 152, as in the above mentioned case. In response to the rotating angle, the electronic control unit controls the throttle body, thereby controlling the opening degree of the throttle valve.

When the depression force applied to the pedal 122 increases, the opening degree of the throttle valve is increased whereas the opening degree of the throttle valve is decreased when the depression force is reduced.

The rotating angle of the accelerator rod 120 rotating during a depression of the pedal 122 and a release of the depression force applied to the pedal 122 is amplified by the first and second lever arms 141 and 142. Accordingly, it is possible to more accurately control the opening degree of the throttle valve. Preferably, the maximum range of the rotating angle of the rotating shaft 152 included in the potentiometer 150 is 82°.

As apparent from the above description, the electric accelerator pedal assembly 100 according to the present invention can achieve an accurate control for the opening degree of the throttle valve because the opening degree of the throttle valve is electrically controlled by the potentiometer 150, and the hinging angle of the accelerator rod 120 hinging during a depression of the pedal 122 or a release of the depression force is amplified by virtue of the first and second lever arms 141 and 142. The electric accelerator pedal assembly 100 also eliminates the problem associated with the accelerator cable, for example, a damage of the cable, and an increased number of assembling steps.

Thus, the present invention provides an electric accelerator pedal assembly of an automobile, which can be easily and accurately manipulated without any possibility of failures resulting from a damage of a cable used, while being capable of reducing the number of assembling steps.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. An electric accelerator pedal assembly of an automobile comprising:
a retainer fixed to a body of the automobile;
an accelerator rod mounted with a pedal at one end thereof, the accelerator rod being hingedly supported by the retainer;
hinging angle transmitting means for transmitting a hinging angle of the accelerator rod in an amplified state;
a potentiometer for detecting the amplified hinging angle transmitted from the hinging angle transmitting means, and outputting a detect signal indicative of the detected hinging angle; and
an electronic control unit for receiving the detect signal from the potentiometer, and electrically controlling an opening degree of a throttle valve in response to the received detect signal.

2. The electric accelerator pedal assembly according to claim 1, wherein:
the accelerator rod is hingedly mounted to a spindle fixedly mounted to the retainer so that it hinges about the spindle; and
the hinging angle transmitting means comprises a first lever arm hingedly connected at one end thereof to the other end of the accelerator rod by a first connecting pin, a second lever arm hingedly connected at one end thereof to the other end of the first lever arm by a second connecting pin, and a rotating shaft fixed at one end thereof to the other end of the second lever arm while being coupled at the other end thereof to the potentiometer, whereby the hinging movement of the accelerator rod about the spindle is transmitted to the rotating shaft in an amplified state via the first and second lever arms, thereby causing the rotating shaft to generate an amplified rotation.

3. The electric accelerator pedal assembly according to claim 2, further comprising:
a torsion coil spring fitted around the spindle and adapted to apply a biasing force to the accelerator rod toward an initial position of the accelerator rod, whereby the accelerator rod hinges from the initial position against the biasing force of the torsion coil spring when a depression force is applied to the pedal, while hinging toward the initial position by virtue of the biasing force of the torsion coil spring when the depression force applied to the pedal is reduced.

4. The electric accelerator pedal assembly according to claim 3, further comprising:
a stopper protruded from the retainer and adapted to limit the hinging movement of the accelerator rod resulting from the biasing force of the torsion coil spring so that the hinging movement of the accelerator rod resulting from the biasing force of the torsion coil spring is stopped at the initial position of the accelerator rod.
